# EUROPÄISCHE PATENTSCHRIFT

(11) **EP 2 060 842 B1**
(45) Veröffentlichungstag und Bekanntmachung des Hinweises auf die Patenterteilung: **28.12.2011**
(21) Anmeldenummer: 08019166.1
(22) Anmeldetag: 03.11.2008
(51) Int. Cl.: F16L 33/22

(54) **Verbindungsbausatz**
Connecting component
Kit de liaison

(30) Priorität: 14.11.2007 DE 202007015991 U
(43) Veröffentlichungstag der Anmeldung: 20.05.2009
(73) Patentinhaber: REHAU AG + Co, 95111 Rehau (DE)
(72) Erfinder: Vohler, Tobias, 92318 Neumarkt (DE); Stadthalter, Peter, 96152 Burghaslach (DE)

(56) Entgegenhaltungen:
- CH-A- 352 206
- FR-A- 1 434 683
- GB-A- 2 164 413
- US-A- 6 003 906

## Beschreibung

Die Erfindung betrifft einen Verbindungsbausatz mit einer Leitung und einer Verbindungseinrichtung.

Bei einem herkömmlichen Verbindungsbausatz wird ein endseitiger Abschnitt der Leitung zwischen zwei Komponenten eines Pressverbinders eingeklemmt, wobei eine innere Komponente am Innenumfang der Leitung und eine äußere Komponente am Außenumfang der Leitung ansetzt. Ein Versatz, der an einem führenden Ende der inneren Komponente entsteht, führt zu Problemen bei der Reinigung solcher Leitungen. Z.B. wird beim Molchen einer solchen Leitung der Reinigungseffekt verschlechtert, da der Molch die gereinigten Ablagerungen an der Versatzkante abstreift oder die Leitung gar nicht molchbar ist, weil der Molch an der Versatzkante hängen bleibt. Ein Molch ist ein Gerät, das in einer Leitung beispielsweise zur Reinigung eingesetzt wird. Der Molch füllt den Leitungsquerschnitt aus und wandert entweder einfach mit dem Produktstrom durch die Leitung oder muss durch extra aufgewendeten Druck (Wasser oder Druckluft) durch die Leitung gepresst werden. Selbst bei der Reinigung mit Reinigungsmitteln können die Ablagerungen an der Versatzkante nicht vollständig entfernt werden.

Aus der US-A-6 003 906 ist ein Verbinder für einen Elastomerschlauch bekannt, der beispielsweise in medizinischen Anwendungen Verwendung finden kann.
Die CH 352 206 A lehrt eine Anschlussvorrichtung für Hochdruckschläuche, die aus einem in das anzuschließende Ende eines Schlauches einsteckbaren Nippel mit sichernden Widerhaken besteht, sowie aus einer zugeordneten Hülse, die das Ende des aufgesteckten Schlauches auf dem Nippel sichert.
Schließlich ist in der FR-A-1 434 683 ein Anschluss an einen mehrschichtigen, mit Verstärkungsmitteln versehenen Schlauch aus Polymermaterial offenbart.

Der Erfindung liegt die Aufgabe zugrunde, einen Verbindungsbausatz mit einer Leitung und einer Verbindungseinrichtung bereitzustellen, der die eingangs definierten Probleme lösen kann.

Zur Lösung dieser Aufgabe stellt die Erfindung einen Verbindungsbausatz mit einer Leitung und einer Verbindungseinrichtung nach Anspruch 1 bereit, wobei ein Innenumfang der Verbindungseinrichtung im Wesentlichen gleich einem Innenumfang der Leitung ist und ein endseitiger Abschnitt der Leitung auf die Verbindungseinrichtung aufschiebbar ist. Als "im Wesentlichen gleich" werden im Rahmen der vorliegenden Beschreibung Innenumfänge bezeichnet, deren Umfangslängen nicht mehr als 15%, vorzugsweise nicht mehr als 10%, bevorzugt nicht mehr als 5% voneinander abweichen und im Idealfall identisch sind, wobei dies unabhängig von den (Innen-) Querschnittsformen der Leitung und der Verbindungseinrichtung gelten soll.

Es hat sich als vorteilhaft erwiesen, wenn die Leitung als Isolationsleitung ausgebildet ist und eine Innenschicht sowie eine Isolationsschicht aufweist. Die Innenschicht ist vorzugsweise eine zumindest abschnittsweise, vorzugsweise vollständig vernetzte Schicht und bietet sicheren Halt beim Aufschieben auf die Verbindungseinrichtung. Die Isolationsschicht ist vorzugsweise eine nicht vernetzte und komprimierbare Schicht, die außerhalb der Innenschicht angeordnet ist.

Außerdem ist vorgesehen, dass die Verbindungseinrichtung einen Stützkörper und eine Schiebehülse aufweist, wobei die Schiebehülse auf den endseitigen Abschnitt der Leitung aufbringbar ist, wenn der endseitige Abschnitt der Leitung auf den Stützkörper aufgeschoben ist. Dadurch wird der endseitige Abschnitt der Leitung zusätzlich in radialer Richtung nach innen gegen die Verbindungseinrichtung gepresst, so dass die Verbindung weiter verbessert wird.

Weiterhin ist vorgesehen, dass der endseitige Abschnitt der Leitung zwischen dem Stützkörper und der Schiebehülse komprimiert ist. Bei Verwendung einer Isolationsleitung entfaltet die Isolationsschicht - zusätzlich zur Federwirkung der Innenschicht - aufgrund ihrer federnden Eigenschaften Presskräfte, die in radialer Richtung nach innen gerichtet sind, um den endseitigen Abschnitt der Leitung am Stützkörper zu fixieren.

Dabei hat es sich als praktisch erwiesen, wenn ein Volumen der Isolationsschicht in einem komprimierten Bereich zwischen 25 % und 75 %, vorzugsweise zwischen 40 % und 60 %, bevorzugt 50 % geringer ist als in einem nicht komprimierten Bereich. Bei Verwendung einer Isolationsleitung ist ein Spalt zwischen der Schiebehülse und dem Stützkörper vorzugsweise derart eingestellt, dass die Isolationsschicht zwischen 25 % und 75 %, vorzugsweise zwischen 40 % und 60 %, bevorzugt 50 % verdichtet bzw. komprimiert wird. Dabei ist eine Dichte der Isolationsschicht in einem komprimierten Bereich zwischen 50 % und 150 %, vorzugsweise zwischen 75 % und 125 %, bevorzugt 100 % größer als in einem nicht komprimierten Bereich. Die Dichte der Isolationsschicht beträgt in einem nicht komprimierten Bereich der Leitung 0,25 g/cm³ bis 0,75 g/cm³, vorzugsweise 0,4 g/cm³ bis 0,6 g/cm³, bevorzugt 0,5 g/cm³. Es ist zu berücksichtigen, dass die Wandstärken der Innenschicht sowie der Isolationsschicht der Isolationsleitung durch das Aufweiten nach dem Aufschieben des endseitigen Abschnitts der Leitung auf den Stützkörper bereits verringert sind. Bei derartigen Komprimierungsverhältnissen wird die Isolationsschicht nicht geschädigt und entfaltet aufgrund ihrer federnden Eigenschaften - zusätzlich zur Federwirkung der Innenschicht - Presskräfte, die in radialer Richtung nach innen gerichtet sind, um den endseitigen Abschnitt der Leitung am Stützkörper zu fixieren.

Weil die Leitung und die Verbindungseinrichtung im Wesentlichen die gleichen Innenumfänge, vorzugsweise die gleichen Innendurchmesser, aufweisen, sind die durchströmbaren Querschnitte der Leitung und der Verbindungseinrichtung im Wesentlichen gleich und die Gefahr von Ablagerungen angrenzend an den Mündungsbereich der Verbindungseinrichtung, wo beim herkömmlichen Verbindungsbausatz eine Versatzkante entstand, wird minimiert bis eliminiert. Durch Aufweiten eines endseitigen Abschnitts der Leitung und Aufschieben des endseitigen Abschnitts der Leitung auf die Verbindungseinrichtung kann die Leitung im Presssitz auf der Verbindungseinrichtung gehalten und eine besonders feste Verbindung bewerkstelligt werden. Dadurch wird die der Erfindung zugrunde liegende Aufgabe gelöst. Vorzugsweise sind ein Innenwandabschnitt der Leitung und ein Innenwandabschnitt der Verbindungseinrichtung im Wesentlichen fluchtend zueinander ausrichtbar.
Es kann von Vorteil sein, wenn die Leitung zumindest abschnittsweise vernetzt ist. Vernetztes Material ist nicht komprimierbar, so dass sich das Verbinden von vernetzen Leitungen i. d. R. einfach gestaltet. Verbindungsbausätze mit Pressverbindern sind bekannt, um vernetzte Leitungen z. B. untereinander oder mit weiteren Einrichtungen zu verbinden, wobei das vernetzte Material zwischen zwei Verbindungskomponenten verpresst, bzw. "eingekammert" wird. Unvernetztes Leitungsmaterial würde bei Temperatur- und Druckwechsel aus der Verbindung heraus "fließen" und die Verbindung würde versagen. Mit dem erfindungsgemäßen Bausatz unter Verwendung einer zumindest abschnittsweise vernetzten Leitung kann eine sichere Verbindung kann auch bei Temperatur- und/oder Druckwechsel bewerkstelligt werden.

Es kann sich als günstig erweisen, wenn die Leitung zumindest abschnittsweise aus Kunststoff gefertigt ist, vorzugsweise als Kunststoffleitung ausgebildet ist. Kunststoff ist i. d. R. kostengünstig zu beschaffen und zu verarbeiten sowie korrosionsbeständig, und ist damit für die Zwecke der vorliegenden Erfindung bestens geeignet.

Bei einer Isolationsleitung lässt sich das Prinzip der Erfindung besonders vorteilhaft zur Geltung bringen: Eine Isolationsleitung eines herkömmlichen Verbindungsbausatzes muss zur Verbindung mit der Verbindungseinrichtung derart vorbehandelt werden, dass die Innenschicht ausgehend vom Leitungsende auf einer Länge von etwas mehr als der doppelten Länge der äußeren Komponente freigelegt ist, so dass die äußere Komponente von außen auf die freigelegte Innenschicht aufgeschoben werden kann und die Leitung im Klemmsitz zwischen den inneren und äußeren Komponenten gehalten werden kann. Die Verbindung erfolgt unmittelbar an der Innenschicht. Das Freilegen der Innenschicht ist zeitaufwändig und kann zur Beschädigung der Innenschicht führen. Zur Wiederherstellung der Wärmedämmung muss der freigelegte Leitungsbereich nachisoliert werden. Beim erfindungsgemäßen Verbindungsbausatz unter Verwendung einer Isolationsleitung wird die Isolationsschicht dagegen nicht beschädigt. Beim Aufweiten der Leitung, um den endseitigen Abschnitt der Leitung auf die Verbindungseinrichtung aufzuschieben, werden die federnden Eigenschaften der Isolationsschicht zusätzlich zu den federnden Eigenschaften der Innenschicht ausgenutzt. Aufgrund einer innewohnenden Rückstellkraft entfalten die Innenschicht und die Isolationsschicht eine federnde Wirkung entgegen der Aufweitung, und die Innenschicht wird in radialer Richtung nach innen gegen die Verbindungseinrichtung gepresst. Dadurch wird der Anpressdruck auf die Verbindungseinrichtung erhöht und die Verbindung wird zusätzlich gesichert.

Es kann praktisch sein, wenn die Innenschicht aus Kunststoff gefertigt ist und vorzugsweise vernetztes Polyethylen aufweist. Vernetztes Polyethylen weist für den Einsatz im Rahmen des erfindungsgemäßen Verbindungsbausatzes ideale Materialeigenschaften auf. So ist eine Leitung mit einer Innenschicht aus vernetztem Polyethylen (PE-Xa) kurzzeitig wärmebeständig bis +110 °C, langzeitig wärmebeständig bis +95 °C sowie chemisch beständig. Die Leitung kann vor Ort gereinigt werden (z. B. Molchen; "cleaning-in-place"), weist eine permanent glatte Innenwandfläche auf und ist geschmacks- sowie geruchsneutral. Aufgrund der glatten Innenwandfläche bilden sich keine Ablagerungen, Verkrustungen oder Korrosion.

Es kann sich als nützlich erweisen, wenn die Isolationsschicht ein Schaummaterial, vorzugsweise einen chemisch und/oder physikalisch geschäumten Kunststoff aufweist. Das Schaummaterial weist hervorragende Isolationseigenschaften auf. Durch die Wärmedämmung werden etliche neue Anwendungsgebiete erschlossen.

Im Übrigen weist das Schaummaterial federnde Eigenschaften auf und ist komprimierbar, was im Rahmen der vorliegenden Erfindung besonders vorteilhaft nutzbar ist.

Es kann nützlich sein, wenn die Leitung ein Sperrschichtmaterial enthält, das vorzugsweise gegenüber Sauerstoff und/oder Kohlendioxid sperrend wirkt. Dadurch ist die Leitung bestens zur Förderung gasförmiger oder Gas enthaltender Medien geeignet.

Es kann sich als hilfreich erweisen, wenn die Innenschicht und die Isolationsschicht fest, vorzugsweise stoffschlüssig, verbunden sind. Dadurch kann verhindert werden, dass sich die Innenschicht und die Isolationsschicht, z. B. beim Aufweiten der Leitung, voneinander lösen und dass die Isolationswirkung lokal beeinträchtigt wird.

Es kann aber auch vorteilhaft sein, wenn die Schiebehülse an einem führenden Ende abgerundet ist und/oder einen divergierenden Mündungsbereich aufweist. Dadurch kann verhindert werden, dass die Schiebhülse beim Aufbringen auf den aufgeweiteten endseitigen Abschnitt der Leitung (bzw. Verpressen) in das Material der Leitung einschneidet.

Es kann außerdem hilfreich sein, wenn ein Innenumfang der Schiebehülse im Wesentlichen gleich einem Außenumfang der Leitung ist. Vorzugsweise wird der Innenumfang bzw. Innendurchmesser der Schiebehülse dabei dem Außenumfang bzw. Außendurchmesser der Leitung angepasst, so dass sich die Schiebhülse gerade noch von Hand überschieben lässt. Dadurch kann eine Montage des Verbindungsbausatzes vereinfacht werden.

Es kann auch als nützlich erweisen, wenn der Stützkörper an einem führenden Ende scharfkantig ausgebildet ist und/oder einen divergierenden Mündungsbereich aufweist. Der Krümmungsradius am führenden Ende des Stützkörpers beträgt dabei vorzugsweise weniger als 4,0 mm, bevorzugt weniger als 2,0 mm.

Dadurch kann die Leitung noch besser gereinigt werden, weil Ablagerungen mangels einer Versatzkante im Übergangsbereich zwischen der Verbindungseinrichtung und der Leitung keinen Halt finden. Ein durch die Verbindungseinrichtung in die Leitung gefördertes Medium kann ungehindert fließen, ohne dass sich Verwirbelungen im Übergangsbereich zwischen der Verbindungseinrichtung und der Leitung ausbilden. Das Material einer zumindest abschnittsweise vernetzten Leitung, insbesondere das Material einer vernetzten Innenschicht einer Isolationsleitung, ist spannungsrissbeständig, so dass die scharfe Kante am führenden Ende des Stützkörpers die Leitung nicht beeinträchtigt oder beschädigt.

Es kann überdies von Vorteil sein, wenn die Verbindungseinrichtung zumindest abschnittsweise aus Metall oder Kunststoff, vorzugsweise Polyvinylidenfluorid, gefertigt ist. Der Stützkörper (bzw. Fitting) und die Schiebehülse können ganz oder teilweise aus Metall oder Kunststoff, vorzugsweise Polyvinylidenfluorid (PVDF), gefertigt werden. Eine Schiebehülse aus Kunststoff hat den Vorteil, dass sie einer eventuellen Volumenverringerung eines Schaummaterials der Isolierschicht folgen kann, das als Federelement wirkt. Je nach Art des zu transportierenden Mediums können Kunststoffteile gegenüber Metallteilen wegen einer verbesserten Korrosionsbeständigkeit vorteilhaft sein. Kunststoffteile können darüber hinaus im kostengünstigen Spritzgießverfahren hergestellt werden.

Auch kann es von Vorteil sein, wenn die Verbindungseinrichtung mindestens einen Haltevorsprung, vorzugsweise eine Halterippe, aufweist, die formschlüssig mit dem endseitigen Abschnitt der Leitung in Eingriff bringbar ist. Dadurch kann eine noch bessere Verbindung zwischen der Verbindungseinrichtung und der Leitung bewerkstelligt werden.

Es kann sich auch als günstig erweisen, wenn die Leitung als Trinkwasserrohr, Getränkeleitung, Nahwärmeleitung insbesondere für Biogasanlagen oder als Kollektorleitung für Erdwärmesonden ausgebildet ist. Bei derartigen Anwendungen lassen sich die Vorteile des erfindungsgemäßen Verbindungsbausatzes besonders vorteilhaft zur Geltung bringen.

Kurze Beschreibung der Zeichnungen:
- Figur 1: zeigt Teilschnittansichten der Komponenten des erfindungsgemäßen Ver- bindungsbausatzes in einem Vormontagezustand, wobei (a) eine Teilschnitt- ansicht eines Stützkörpers einer Verbindungseinrichtung zeigt, (b) eine Teil- schnittansicht einer Schiebehülse der Verbindungseinrichtung zeigt, und (c) eine Teilschnittansicht einer Isolationsleitung zeigt.
- Figur 2: zeigt eine schematische Teilschnittansicht der Komponenten des erfin- dungsgemäßen Verbindungsbausatzes in einem Montage- bzw. Verbin- dungszustand.

### Detaillierte Beschreibung der bevorzugten Ausführungsbeispiele:

Die Erfindung betrifft einen Verbindungsbausatz mit einer Leitung 1 und einer Verbindungseinrichtung 2, wobei ein Innenumfang U_{iV} der Verbindungseinrichtung 2 im Wesentlichen gleich einem Innenumfang U_{iL} der Leitung 1 ist und ein endseitiger Abschnitt der Leitung 1 auf die Verbindungseinrichtung 2 aufschiebbar ist. Ein Innenwandabschnitt der U_{iV} der Leitung 1 und ein Innenwandabschnitt der Verbindungseinrichtung 2 sind im Wesentlichen fluchtend zueinander ausrichtbar.

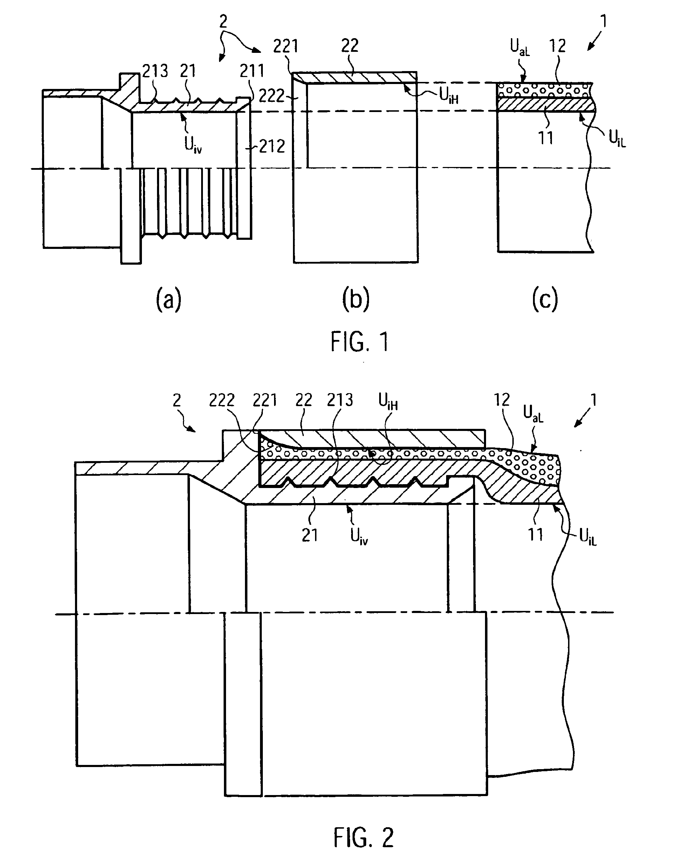

Figur 1 zeigt Teilschnittansichten der Komponenten des erfindungsgemäßen Verbindungsbausatzes in einem Vormontagezustand. Die Zeichnung (a) zeigt eine Teilschnittansicht eines Stützkörpers 21 der Verbindungseinrichtung 2, die Zeichnung (b) zeigt eine Teilschnittansicht einer Schiebehülse 22 der Verbindungseinrichtung 2, und die Zeichnung (c) zeigt eine Teilschnittansicht der Leitung, die als Isolationsleitung 1 ausgebildet ist.

Die Merkmale der Leitung 1 werden nachstehend mit Bezug auf die Figuren, insbesondere die Figur 1 (c), beschrieben.

Die Leitung 1 ist als flexible und biegsame Isolationsteitung 1 aus Kunststoff ausgebildet und weist eine Innenschicht 11 sowie eine Isolationsschicht 12 auf. Der Querschnitt der Leitung 1 ist vorzugsweise kreisförmig, wenngleich auch andere Querschnittsformen darstellbar sind. Die Innenschicht 11 und die Isolationsschicht 12 sind fest, vorzugsweise stoffschlüssig, verbunden, so dass sich die Innenschicht 11 und die Isolationsschicht 12 nicht gegeneinander bewegen und voneinander lösen. Die Leitung ist gewöhnlich als Druckleitung bzw. Druckrohr ausgebildet und ist vorzugsweise bis 2,4 MPa, bevorzugt bis 1,5 MPa (bei 20 °C mit Sicherheitsfaktor 1,25) druckbeständig. Der Außendurchmesser der Leitung 1 beträgt zwischen 10 mm und 300 mm, vorzugsweise zwischen 16 mm und 160 mm, bevorzugt 100 mm, wobei ein Verhältnis der Wandstärke der Innenschicht 11 zur Wandstärke der Isolationsschicht 12 im Vormontagezustand gemäß Figur 1 (c) i. d. R. zwischen 0,25 und 2, vorzugsweise zwischen 0,5 und 1,5, bevorzugt 1, ist. Die Wandstärke der Innenschicht 11 beträgt vorzugsweise 10 mm bei einem Außendurchmesser der Leitung 1 von 100 mm.

Die Innenschicht 11 der Leitung 1 ist aus vernetztem Polyethylen (PE-Xa) gefertigt. Grundsätzlich ist aber jeder vernetzbare Kunststoff zur Fertigung der Innenschicht verwendbar.
Die Isolationsschicht 12 weist ein Schaummaterial, vorzugsweise einen chemisch und/oder physikalisch geschäumten Kunststoff auf. Geeignet sind insbesondere chemisch bzw. physikalisch geschäumte Polyolefine, die eine Wärmedämmung der Leitung 1 bewerkstelligen. Alternativ können Reaktionsschäume (Polyurethan) verwendet werden.

Die Leitung kann daneben auch weitere Schichten wie z. B. eine Verstärkungsschicht, eine Sperrschicht und/oder eine Schutzschicht etc. enthalten. Nach Bedarf kann die Leitung 1 beispielsweise ein Sperrschichtmaterial enthalten, das gegenüber einer in dem durch die Leitung geförderten Medium enthaltenen Substanz, beispielsweise Sauerstoff und/oder Kohlendioxid, sperrend wirkt.

Die Merkmale der Verbindungseinrichtung 2 werden nachstehend mit Bezug auf die Figuren, insbesondere die Figuren 1 (a) und (b), beschrieben.

Die Verbindungseinrichtung 2 weist einen Stützkörper 21 und eine Schiebehülse 22 auf, und ist zumindest abschnittsweise aus Metall oder Kunststoff, vorzugsweise Polyvinylidenfluorid, gefertigt.

Der Stützkörper 21 ist an einem führenden Ende 211 scharfkantig ausgebildet ist und weist einen divergierenden Mündungsbereich 212 auf. Ein Krümmungsradius an einem führenden Ende 211 des Stützkörpers 21 ist kleiner als 4,0 mm und beträgt z. B. 1,5 mm. Ein hohlzylindrischer Flanschabschnitt des Stützkörpers 21, auf welchen der endseitige Abschnitt der Leitung 1 aufschiebbar ist, ist an seiner äußeren Mantelfläche mit mehreren im Umfangsrichtung geschlossenen Halterippen 213 versehen, um den endseitigen Abschnitt der Leitung 1 im Montage- bzw. Verbindungszustand (Figur 2) formschlüssig zu halten. Die Schiebehülse 22 ist auf den endseitigen Abschnitt der Leitung 1 aufbringbar bzw. aufpressbar, wenn der endseitige Abschnitt der Leitung 1 auf den Stützkörper 21 aufgeschoben ist, wie in Figur 2 dargestellt ist. Die Schiebehülse 22 ist an einem führenden Ende 221 abgerundet und weist einen divergierenden Mündungsbereich 222 auf. Ein Innenumfang U_{iH} bzw. ein Innendurchmesser der Schiebehülse 22 ist im Wesentlichen gleich einem Außenumfang U_{aL} der Leitung 1.

Eine bevorzugte und bestimmungsgemäße Anwendung des erfindungsgemäßen Verbindungsbausatzes wird nachstehend mit Bezug auf die Figuren, insbesondere die Figur 2, beschrieben.

Zum Verbinden der Komponenten des erfindungsgemäßen Verbindungsbausatzes wird die Schiebehülse 22 zunächst auf den mit der Verbindungseinrichtung 2 zu verbindenden, endseitigen Abschnitt der Leitung 1 aufgeschoben und in einer Vormontageposition angeordnet. In der Vormontageposition ist das führende Ende 221 der Schiebehülse 22 um etwas mehr als die Länge des Flanschabschnitts, welche der Länge der Schiebehülse 22 entspricht, gegenüber dem aufzuschiebenden Ende der Leitung 1 ersetzt, so dass die Leitung 1 ungehindert aufgeschoben werden kann. Der endseitige Abschnitt der Leitung 1 wird aufgeweitet und auf die Verbindungseinrichtung 2 aufgeschoben, so dass ein Innenwandabschnitt U_{iL} der Leitung 1 und ein Innenwandabschnitt U_{iV} der Verbindungseinrichtung 2 im Wesentlichen fluchtend zueinander ausgerichtet sind (Fig. 2). Durch die Federwirkung der aufgeweiteten Innenschicht 11 und der aufgeweiteten Isolierschicht 12, wird die Innenschicht 11 in radialer Richtung nach innen gegen den Flanschabschnitt des Stützkörpers 21 verpresst, so dass die Leitung 1 im Presssitz auf dem Flanschabschnitt des Stützkörpers 21 sitzt und sich die Innenschicht 11 mit den Halterippen 213 formschlüssig in Eingriff befindet.

Die Schiebehülse 22 wird anschießend von der Vormontageposition in die Montageposition (Fig. 2) überführt und dazu derart auf den endseitigen Abschnitt der Leitung 1 aufgebracht, dass der endseitige Abschnitt der Leitung 1 zwischen dem Stützkörper 21 und der Schiebehülse 22 komprimiert ist. Dazu wird die Schiebehülse 22 i. d. R. mit geeignetem Werkzeug auf den endseitigen Abschnitt der Leitung 1 aufgepresst. Der Spalt zwischen der Schiebehülse 22 und dem Flanschabschnitt des Stützkörpers 21 ist derart bemessen, dass ein Volumen der Isolationsschicht 12 in einem komprimierten Bereich zwischen 25 % und 75 %, vorzugsweise zwischen 40 % und 60 %, bevorzugt 50 % geringer ist als in einem nicht komprimierten Bereich. Die Dichte der Isolationsschicht 12 erhöht sich bei der Komprimierung von ca. 0,5 g/cm³ in einem nicht komprimierten Bereich auf ca. 1,0 g/cm³ im komprimierten Bereich zwischen der Schiebehülse 22 und dem Flanschabschnitt des Stützkörpers 21.

Wie in Figur 2 anschaulich dargestellt ist, sind ein Innenwandabschnitt U_{iL} der Leitung 1 und ein Innenwandabschnitt U_{iV} der Verbindungseinrichtung 2 im Wesentlichen fluchtend zueinander ausgerichtet, so dass sich im Übergangsbereich zwischen der Verbindungseinrichtung 2 und der Leitung 1 keine Versatzkante bildet, an welcher sich Ablagerungen bilden.

Die Leitung 1 ist als Druckrohr, vorzugsweise als Trinkwasserrohr, Getränkeleitung, Nahwärmeleitung insbesondere für Biogasanlagen oder Kollektorleitung für Erdwärmesonden ausgebildet.

Der erfindungsgemäße Verbindungsbausatz ist vorzugsweise anwendbar für:
- Erdverlegte Leitungen für Bier, Softdrinks, etc., die regelmäßig mit heißem Wasser, Dampf oder Chemikalien gereinigt werden;
- Erdverlegte Nahewärmeleitungen im Rücklauf von Biogasanlagen;
- Kollektorleitungen für Erdwärmesonden;
- Rohre zur grabenlosen Verlegung bzw. Sanierung;
- Installationen im Anlagenbau und der Gebäudetechnik, bei denen Wärmedämmung, mechanischer Schutz oder beides gemeinsam gefordert wird (z. B. auch Installationen im Schiffbau);
- Kaltwasserleitungen, bei denen die Kondensatbildung vermieden werden soll (z. B. auch Anschluss von Klimageräten);
- Kaltwasserleitungen, die vor dem Einfrieren geschützt werden sollen (z. B. in Tierställen), evtl. mit Begleitheizung.

Daneben kommen weitere Anwendungen in Betracht, die in der voranstehenden Aufzählung nicht ausdrücklich angeführt sind.

## Patentansprüche

1. Verbindungsbausatz mit einer Leitung (1) und einer Verbindungseinrichtung (2), wobei die Leitung (1) als Isolationsleitung ausgebildet ist und eine Innenschicht (11) sowie eine Isolationsschicht (12) aufweist, und wobei ein Innenumfang (U_{iV}) der Verbindungseinrichtung (2) im Wesentlichen gleich einem Innenumfang (U_{iL}) der Leitung (1) ist und ein endseitiger Abschnitt der Leitung (1) auf die Verbindungseinrichtung (2) aufschiebbar ist, und wobei die Verbindungseinrichtung (2) einen Stützkörper (21) und eine Schiebehülse (22) aufweiset, wobei die Schiebehülse (22) auf den endseitigen Abschnitt der Leitung (1) aufbringbar ist, wenn der endseitige Abschnitt der Leitung (1) auf den Stützkörper (21) aufgeschoben ist, so dass der endseitige Abschnitt der Leitung (1) zwischen dem Stützkörper (21) und der Schiebehülse (22) komprimiert ist, **dadurch gekennzeichnet, dass** ein Volumen der Isolationsschicht (12) in einem komprimierten Bereich zwischen 25 % und 75 %, vorzugsweise zwischen 40 % und 60 %, bevorzugt 50 % geringer ist als in einem nicht komprimierten Bereich.

2. Verbindungsbausatz nach Anspruch 1, **dadurch gekennzeichnet, dass** die Leitung (1) zumindest abschnittsweise vernetzt ist.

3. Verbindungsbausatz nach einem der vorangegangenen Ansprüche, **dadurch gekennzeichnet, dass** die Leitung (1) zumindest abschnittsweise aus Kunststoff gefertigt ist, vorzugsweise als Kunststoffleitung ausgebildet ist.

4. Verbindungsbausatz nach einem der vorangegangenen Ansprüche, **dadurch gekennzeichnet, dass** die Innenschicht (11) vernetztes Polyethylen aufweist, vorzugsweise aus vernetztem Polyethylen besteht.

5. Verbindungsbausatz nach einem der vorangegangenen Ansprüche, **dadurch gekennzeichnet, dass** die Isolationsschicht (12) ein Schaummaterial, vorzugsweise einen chemisch und/oder physikalisch geschäumten Kunststoff, aufweist.

6. Verbindungsbausatz nach einem der vorangegangenen Ansprüche, **dadurch gekennzeichnet, dass** die Leitung (1) ein Sperrschichtmaterial enthält, das vorzugsweise gegenüber Sauerstoff und/oder Kohlendioxid sperrend wirkt.

7. Verbindungsbausatz nach einem der vorangegangenen Ansprüche, **dadurch gekennzeichnet, dass** die Innenschicht (11) und die Isolationsschicht (12) fest, vorzugsweise stoffschlüssig, verbunden sind.

8. Verbindungsbausatz nach einem der vorangegangenen Ansprüche, **dadurch gekennzeichnet, dass** die Schiebehülse (22) an einem führenden Ende (221) abgerundet ist und/oder einen divergierenden Mündungsbereich (222) aufweist.

9. Verbindungsbausatz nach einem der vorangegangenen Ansprüche, **dadurch gekennzeichnet, dass** ein Innenumfang (U_{iH}) der Schiebehülse (22) im Wesentlichen gleich einem Außenumfang (U_{aL}) der Leitung (1) ist.

10. Verbindungsbausatz nach einem der vorangegangenen Ansprüche, **dadurch gekennzeichnet, dass** der Stützkörper (21) an einem führenden Ende (211) scharfkantig ausgebildet ist und/oder einen divergierenden Mündungsbereich (212) aufweist.

11. Verbindungsbausatz nach einem der vorangegangenen Ansprüche, **dadurch gekennzeichnet, dass** die Verbindungseinrichtung (2) mindestens einen Haltevorsprung, vorzugsweise eine Halterippe (213), aufweist, der bzw. die formschlüssig mit dem endseitigen Abschnitt der Leitung (1) in Eingriff bringbar ist.

## Claims

1. Connecting component with a line (1) and a connecting device (2), the line (1) being formed as an insulating line and having an inner layer (11) and an insulating layer (12), and an inner circumference (U_{iV}) of the connecting device (2) being substantially equal to an inner circumference (U_{iL}) of the line (1) and it being possible for an end portion of the line (1) to be pushed onto the connecting device (2), and the connecting device (2) having a supporting body (21) and a sliding sleeve (22), it being possible for the sliding sleeve (22) to be fitted onto the end portion of the line (1) when the end portion of the line (1) has been pushed onto the supporting body (21), so that the end portion of the line (1) is compressed between the supporting body (21) and the sliding sleeve (22), **characterized in that** a volume of the insulating layer (12) in a compressed region is between 25% and 75%, preferably between 40% and 60%, with preference 50%, smaller than in a non-compressed region.

2. Connecting component according to Claim 1, **characterized in that** the line (1) is crosslinked at least in certain portions.

3. Connecting component according to one of the preceding claims, **characterized in that** the line (1) is produced from plastic at least in certain portions, preferably as a plastic line.

4. Connecting component according to one of the preceding claims, **characterized in that** the inner layer (11) comprises crosslinked polyethylene, preferably consists of crosslinked polyethylene.

5. Connecting component according to one of the preceding claims, **characterized in that** the insulating layer (12) comprises a foam material, preferably a chemically and/or physically foamed plastic.

6. Connecting component according to one of the preceding claims, **characterized in that** the line (1) contains a barrier layer material, which preferably has a barrier effect with respect to oxygen and/or carbon dioxide.

7. Connecting component according to one of the preceding claims, **characterized in that** the inner layer (11) and the insulating layer (12) are connected in a fixed manner, preferably by a material bond.

8. Connecting component according to one of the preceding claims, **characterized in that** the sliding sleeve (22) is rounded off at a leading end (221) and/or has a diverging mouth region (222).

9. Connecting component according to one of the preceding claims, **characterized in that** an inner circumference (U_{iH}) of the sliding sleeve (22) is substantially equal to an outer circumference (U_{aL}) of the line (1).

10. Connecting component according to one of the preceding claims, **characterized in that** the supporting body (21) is formed with a sharp edge at a leading end (211) and/or has a diverging mouth region (212).

11. Connecting component according to one of the preceding claims, **characterized in that** the connecting device (2) has at least one holding projection, preferably a holding rib (213), which can be brought into engagement by a form fit with the end portion of the line (1).

## Revendications

1. Kit de liaison avec une conduite (1) et un dispositif de liaison (2), dans lequel la conduite (1) se présente sous la forme d'une conduite isolante et présente une couche intérieure (11) ainsi qu'une couche isolante (12), et dans laquelle un périmètre intérieur (U_{iV}) du dispositif de liaison (2) est essentiellement égal à un périmètre intérieur (U_{iL}) de la conduite (1) et une partie d'extrémité de la conduite (1) peut être engagée sur le dispositif de liaison (2), et dans lequel le dispositif de liaison (2) présente un corps d'appui (21) et une douille coulissante (22), dans lequel la douille coulissante (22) peut être montée sur la partie d'extrémité de la conduite (1), lorsque la partie d'extrémité de la conduite (1) est engagée sur le corps d'appui (21), de telle manière que la partie d'extrémité de la conduite (1) soit comprimée entre le corps d'appui (21) et la douille coulissante (22), **caractérisé en ce qu'**un volume de la couche isolante (12) dans une zone comprimée est entre 25 % et 75 %, de préférence entre 40 % et 60 %, de préférence encore 50 %, plus petit que dans une zone non comprimée.

2. Kit de liaison selon la revendication 1, **caractérisé en ce que** la conduite (1) est réticulée au moins localement.

3. Kit de liaison selon l'une quelconque des revendications précédentes, **caractérisé en ce que** la conduite (1) est fabriquée au moins localement en matière plastique, de préférence se présente sous la forme d'une conduite en matière plastique.

4. Kit de liaison selon l'une quelconque des revendications précédentes, **caractérisé en ce que** la couche intérieure (11) présente du polyéthylène réticulé, et de préférence se compose de polyéthylène réticulé.

5. Kit de liaison selon l'une quelconque des revendications précédentes, **caractérisé en ce que** la couche isolante (12) présente une matière expansée, de préférence une matière plastique expansée chimiquement et/ou physiquement.

6. Kit de liaison selon l'une quelconque des revendications précédentes, **caractérisé en ce que** la conduite (1) contient un matériau de couche de barrage, qui fait barrage de préférence à l'égard de l'oxygène et/ou du dioxyde de carbone.

7. Kit de liaison selon l'une quelconque des revendications précédentes, **caractérisé en ce que** la couche intérieure (11) et la couche isolante (12) sont assemblées de façon solidaire, de préférence en continuité de matière.

8. Kit de liaison selon l'une quelconque des revendications précédentes, **caractérisé en ce que** la douille coulissante (22) est arrondie et/ou présente une zone d'embouchure divergente (222) à une extrémité de guidage (221).

9. Kit de liaison selon l'une quelconque des revendications précédentes, **caractérisé en ce qu'**un périmètre intérieur (U_{iH}) de la douille coulissante (22) est essentiellement égal à un périmètre extérieur (U_{aL}) de la conduite (1).

10. Kit de liaison selon l'une quelconque des revendications précédentes, **caractérisé en ce que** le corps d'appui (21) est réalisé avec une arête vive et/ou présente une zone d'embouchure divergente (212) à une extrémité de guidage (211).

11. Kit de liaison selon l'une quelconque des revendications précédentes, **caractérisé en ce que** le dispositif de liaison (2) présente au moins une saillie d'arrêt, de préférence une nervure d'arrêt (213), qui peut être mise en prise par complémentarité de forme avec la partie d'extrémité de la conduite (1).
